# EUROPÄISCHE PATENTSCHRIFT

(11) **EP 3 339 387 B1**
(45) Veröffentlichungstag und Bekanntmachung des Hinweises auf die Patenterteilung: **24.06.2020**
(21) Anmeldenummer: 16206306.9
(22) Anmeldetag: 22.12.2016
(51) Int. Cl.: C09D 175/04, C07F 7/18, C09D 5/16, C09D 183/08

(54) **VERBINDUNGEN AUF BASIS VON ADDUKTEN MIT ISOCYANATEN FÜR BESCHICHTUNGSZUSAMMENSETZUNGEN**
COMPOUNDS BASED ON OF ADDUCTS WITH ISOCYANATES FOR COATING COMPOSITIONS
LIAISONS À BASE D'ADDUITS AVEC DES ISOCYANATES POUR COMPOSITIONS DE REVÊTEMENT

(43) Veröffentlichungstag der Anmeldung: 27.06.2018
(73) Patentinhaber: Evonik Operations GmbH, 45128 Essen (DE)
(72) Erfinder: HALLACK, Markus, 46514 Schermbeck (DE); SCHIEMANN, Yvonne, 46357 Essen (DE)
(74) Vertreter: Evonik Patent Association

(56) Entgegenhaltungen:
- WO-A1-2015/011177
- US-B1- 6 441 213
- NASAR A SULTAN ET AL: "Synthesis and properties of imidazole-blocked toluene diisocyanates", JOURNAL OF MACROMOLECULAR SCIENCE , PART A - PURE AND APPLIED CHEMIS, MARCEL DEKKER INC, US, Bd. 34, Nr. 7, 1. Januar 1997 (1997-01-01) , Seiten 1237-1247, XP009168473, ISSN: 1060-1325, DOI: 10.1080/10601329708009382

## Beschreibung

Gegenstand der vorliegenden Erfindung sind Verbindungen auf Basis von Addukten mit Isocyanaten. Die vorliegende Erfindung betrifft weiterhin ein Verfahren zu ihrer Herstellung, Zusammensetzungen enthaltend diese Verbindungen sowie deren Verwendung als oder zur Herstellung von Beschichtungen.

Schiffsbeschichtungen werden als Decklack auf Schiffsrümpfe oder andere Unterwasserstrukturen verwendet, um die Ansiedlung und das Wachstum von marinen Organismen, wie beispielsweise Seepocken oder Algen, zu verhindern, dem sogenannten Biofouling. Als Unterwasserstrukturen werden im Sinne der vorliegenden Erfindung Schiffsböden bzw. Schiffsrümpfe, Bestandteile auf und unterhalb der Wasserlinie von Wasserfahrzeugen, feste Ufer, Netze, Hafenanlagen, Windkraftanlagen, Bojen, Pipelines, Brücken, Aquakultur-Netze, Anlagen im Zusammenhang mit U-Booten, Off-Shore-Installationen, wie z. B. Bohrinseln, Rohre, Wellenbrecher oder Schiffsanker bezeichnet.

Dieser Bewuchs bzw. das Biofouling stellt für die marine Industrie und Schifffahrt seit jeher einen erheblichen Störfaktor dar. Der organische Aufwuchs besteht vor allem aus Seepocken, Miesmuscheln, Pilzen, Schnecken, Algen und weiteren Kleinstlebewesen, wobei Algen das Trägermaterial für Makrofouling darstellen.

Wie alle im Meerwasser vorhandenen Objekte kann ein Bootskörper oder eine Schiffsschraube innerhalb weniger Monate vollständig mit so genannten Bio-Foulern bewachsen sein. Der Wasserwiderstand eines vollständig bewachsenen Rumpfes erhöht sich dabei immens und mit ihm ein Anstieg der Treibstoffkosten von bis zu 40%, woraus markante ökonomische wie ökologische Einflüsse resultieren. Zusätzlich kann die Steuerbarkeit beeinträchtigt werden, welches ein enormes Sicherheitsrisiko darstellt, sowie zu Beschädigungen am Schiffsrumpf führen.

Zur Instandhaltung des Bewuchsschutzes bei Seeschiffen wird heute eine Reihe verschiedener Anforderungen an Schiffsbeschichtungen gestellt. Sie sollen einerseits kostengünstig sein, andererseits eine möglichst lange Standzeit aufweisen. Zusätzlich werden eine hohe und kontinuierliche Wirksamkeit gegen möglichst alle potentiellen Bewuchsorganismen, eine geringe Oberflächenrauhigkeit, eine hohe Widerstandsfähigkeit gegen mechanische und chemische Belastungen und günstige Dockintervall abhängt.

Die Dockungsintervalle von Seeschiffen werden allerdings nicht von eintretendem Bewuchs der Schiffsrümpfe vorgegeben, sondern von den Klassifikationsgesellschaften bzw. durch schiffahrtsrechtliche Vorgaben bestimmt. Das durchschnittliche Dockungsintervall der Welthandelsflotte liegt derzeit bei knapp unter 30 Monaten. Nach den Vorschriften der Klassifikationsgesellschaften sind Standardschiffe nach einer Betriebsperiode von 2,5 Jahren im Dock vorzustellen, damit im Rahmen einer Zwischenbesichtigung das Unterwasserschiff untersucht werden kann. Nach weiteren 2,5 Jahren Betrieb steht die Erneuerung der Klasse an, was wiederum eine Dockung unausweichlich macht. Alle Passagierschiffe müssen darüber hinaus gehende Vorschriften erfüllen. Sie sind jährlich im Dock zu besichtigen. Eine zunehmende Zahl von Schiffen ist so ausgerüstet, dass die Zwischenbesichtigung auch im schwimmenden Zustand durchgeführt werden kann (In Water Survey, IWS). Durch einen IWS wird eine Dockung pro Klassenlaufzeit (5 Jahre) eingespart. Da ein IWS-Schiff somit 60 Monate im Wasser verbleibt, muss dem bei der Wahl des Korrosionsschutz- und des Antifoulingsystems Rechnung getragen werden.

Seit 2003 ist in der EU der Gebrauch von Organozinn-Verbindungen in Schiffsfarben verboten, sodass der bis dahin am weitesten verbreitete Anstrich auf Basis von Tributylzinn (TBT) nicht weiter verwendet werden durfte. Bis 2008 mussten darüber hinaus alle Altbestände an TBT auf den Schiffsrümpfen abgebaut sein. TBT war vor allem aufgrund seiner hormonähnlichen Eigenschaft in Verruf geraten, die z. B. in der Nordsee u. a. bei der Wellhornschnecke einen hohen Anteil fortpflanzungsunfähiger Individuen hervorgebracht hatte. Prinzipiell ist erkennbar, dass chemisch wirksame Schutzanstriche, die auf der kontrollierten Freisetzung biozider Substanzen, wie z.B. TBT, Kupfer oder organischer Wirkstoffe basieren, zunehmend von neuartigen Forschungsansätzen abgelöst werden. Da das Risiko von Langzeitfolgen bzw. -schäden chemischer Bewuchsschutzmethoden in der Vergangenheit nur schwer abgeschätzt werden konnte, bemüht man sich heute um die Entwicklung ökologisch verträglicher Antifoulingtechniken, sogenannter "non-toxic" Antifoulings.

Aufgrund der EU-Biozid-Richtlinie von 1998 müssen alle bislang verwendeten und ebenso alle neu hinzukommenden Wirkstoffe überprüft werden. Ziel ist es alle Chemikalien, die cancerogen sind, das Erbgut verändern, die Furchtbarkeit beinträchtigen sowie persistent sind und sich in Nahrungsketten anreichern, zu verbieten. Nur wenn es keine Alternative gibt, werden bestimmte Biozide übergangsweise dennoch zulassen. Diese werden dann von der EU nach einer positiven Bewertung in den Anhang I/IA der Richtlinie aufgenommen und dürfen verwendet werden. Bei einer negativen Beurteilung werden die Wirkstoffe in einer Liste der nicht angenommenen Wirkstoffe veröffentlicht und müssen innerhalb von 12 Monaten vom Markt genommen werden. Auf der Liste der nicht mehr für Antifouling zugelassenen Wirkstoffe stehen zurzeit ca. 35 Stoffe, darunter Formaldehyd, Captan CAS Reg.-Nr. [133-06-2] und das früher sehr häufig verwendete Diuron CAS Reg.-Nr. [330-54-1]. Die Bewertung weiterer Altstoffe wird zurzeit durchgeführt.

DE102009014685 A1 beschreibt die Verwendung von lösungsmittelfreien und lichtbeständigen Beschichtungsstoffen auf Basis eines amino- und/oder hydoxylgruppenfunktionellen Reaktionspartners, welcher mit Isocyanaten vernetzbar ist, die eine antimikrobielle Wirkung basierend auf Metallionen, insbesondere Silber- kationen, zeigen.

WO 2015/011177A1 offenbart eine Beschichtungszusammensetzung enthaltend Medetomidin, jedoch wird Medetomidin in suspendierter Form in der Beschichtungszusammensetzung verwendet, wobei die Konzentration des Medetomidins in der Beschichtung zunehmend abnimmt, da das Medetomidin bekanntermaßen wasserlöslich und nicht kovalent in der Zusammensetzung gebunden ist.

US 6,441,213 B1 beschreibt Haftvermittler für die Anwendungen im elektronischen Bereich. Hierbei werden Isocyanatoalkylalkoxysilane eingesetzt, wobei die Umsetzung ausschließlich mit Hydroxygruppe enthaltenden Verbindungen beschrieben ist.

Die Veröffentlichung "Synthesis and properties of imidazoleblocked toluene diisoxyanates", Nasar A. Sultan et al., Journal of Macromolecular Science, Part A - Pure and applied Chemis, Marcel Dekker Inc, US, Bd. 34, Nr. 7, 101.01.1997, Seiten 1237-1247 offenbart Verbindungen, die durch Addition von Imidazol und Isocyanate hergestellt wurden.

Die der Erfindung zugrunde liegende Aufgabe bestand daran, neue Verbindungen für Schiffsbeschichtungen bereitzustellen, deren Anwendung den genannten Effekten, wie z. B. der Ansiedelung von marinen Organismen auf Schiffsrümpfen oder anderen Unterwasserstrukturen entgegenwirkt. Weiterhin bestand eine der vorliegenden Erfindung zugrunde liegende Aufgabe darin, ein nach den gesetzlichen Biozidkriterien, wie z. B. der EU-Biozid-Richtlinie von 1998, konformes und wirksames Agens zu entwickeln. Insbesondere ist es eine Aufgabe der vorliegenden Erfindung Verbindungen für Beschichtungszusammensetzungen bereitzustellen, welche keine der bereits gesetzlich nicht mehr zulässigen Stoffe, wie z. B. Trialkyl-Zinnderivate, aufweisen. Gelöst wird diese Aufgabe durch eine Verbindung der Formel (1): 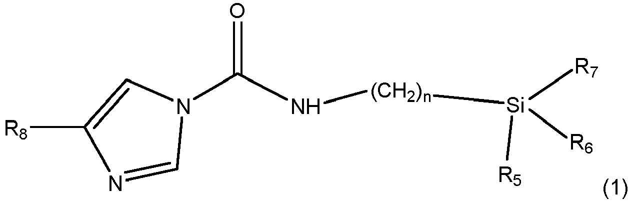 aufweist, wobei n = 1 - 8,
R₅, R₆, R₇ unabhängig voneinander ausgewählt sind aus der Gruppe C1 - C3-Alkoxyrest, R₈ ausgewählt ist aus der Gruppe Alkyl-, Aralkyl-, Heteroaralkylrest.

Besonders bevorzugt weist die erfindungsgemäße Verbindung die Struktur der nachfolgenden Formel (2): 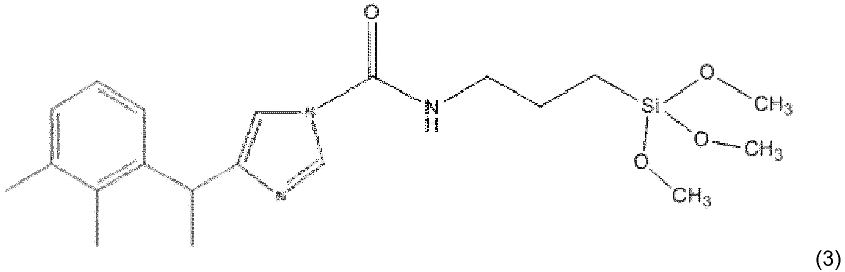 auf.

Mit einem weiteren Gegenstand der vorliegenden Erfindung ist ein Verfahren zur Herstellung der erfindungsgemäßen Verbindung (1).

Auch ein Gegenstand der vorliegenden Erfindung ist die Verwendung der erfindungsgemäßen Verbindung (1) in Zusammensetzungen zur Beschichtung auf Unterwasserstrukturen zum Schutze vor Ansiedelung und/oder Wachstum von marinen Organismen.

Ein weiterer Gegenstand der der vorliegenden Erfindung ist ein Verfahren zum Auftragen der erfindungsgemäßen Zusammensetzung, in welchem die Umsetzung zu einer erfindungsgemäßen Verbindung (1) derart erfolgt, dass mindestens eine Isocyanat-Gruppe enthaltende Verbindung, wie nachfolgend definiert, und mindestens eine pharmakologisch aktiven Verbindung, die mindestens eine Amin-Gruppe aufweist, wie nachfolgend definiert, durch das Auftragen auf das zu beschichtende Substrat in Kontakt gebracht werden. Unter dem zu beschichtenden Substrat werden vorzugsweise die eingangs genannten Unterwasserstrukturen verstanden.

Ein weiterer Gegenstand der vorliegenden Erfindung sind Zusammensetzungen, welche die erfindungsgemäße Verbindung (1) aufweisen.

Die erfindungsgemäße Zusammensetzung zeichnet sich bevorzugt dadurch aus, dass sie die Verbindung der Formel (2) aufweist. Vorteilhaft ist es im Sinne der vorliegenden Erfindung, wenn die hierin beschriebene Zusammensetzung einen Haftvermittler aufweist, vorzugsweise ausgewählt aus der Gruppe der Aminosilane, der Aminoalkylsilane oder der alkoxysilylalkyl-substituierten Amine der Formel (6):

AₘSiYₙ (6),

wobei A eine substituierte oder unsubstituierte Aminoalkylgruppe, eine substituierte oder unsubstituierte Diaminodialkylgruppe oder substituierte oder unsubstituierte Triaminotrialkylgruppe darstellt, die Gruppen Y gleich oder verschieden sind, wobei Y für OH, ONa, OK, OR', OCOR', OSiR'₃, Cl, Br, I oder NR'₂ steht, m gleich 1 oder 2 und n gleich 1, 2 oder 3 sind, mit der Maßgabe m+n = 4, wobei die Gruppe R' unabhängig Wasserstoff, lineare oder verzweigte Alkyl-, Cycloalkyl-, Alkenyl-, Cycloalkenyl-, Alkinyl-, Cycloalkinyl-, Aryl- oder Heteroarylgruppen sind, jeweils 1 bis 18 C-Atomen aufweisen und jeweils ggf. substituiert sein können.

Vorzugsweise ist m gleich 1 und n gleich 3. Weiterhin bevorzugt ist Y ausgewählt aus OH oder OR', wobei OR' besonders bevorzugt ist. In diesem Falle ist R' insbesondere ausgewählt aus Methyl- oder Ethylgruppen, wobei Methylgruppen insbesondere bevorzugt sind.

Solche Aminosilane, Aminoalkylsilane oder alkoxysilylalkyl-substituierten Amine sind beispielsweise, aber nicht ausschließlich, 3-Aminopropyltrimethoxysilan, 3-Aminopropyltriethoxysilan, 2-Aminoethyl-3-aminopropyltrimethoxysilan, 3-Aminopropyl(diethoxymethoxysilan), 3-Aminopropyl(tripropoxysilan), 3-Aminopropyl(dipropoxymethoxysilan), 3-Aminopropyl(tridodecanoxysilan), 3-Aminopropyl(tritetradecanoxysilan), 3-Aminopropyl(trihexadecanoxysilan), 3-Aminopropyl(trioctadecanoxysilan), 3-Aminopropyl(didodecanoxy)tetradecanoxysilan, 3-Aminopropyl(dodecanoxy)-tetradecanoxy(hexadecanoxy)silan, 3-Aminopropyl(dimethoxymethylsilan), 3-Aminopropyl(methoxydimethylsilan), 3-Aminopropyl(hydroxydimethylsilan), 3-Aminopropyl(diethoxymethylsilan), 3-Aminopropyl(ethoxydimethylsilan), 3-Aminopropyl(dipropoxymethylsilan), 3-Aminopropyl(propoxydimethylsilan), 3-Aminopropyl(diisopropoxymethylsilan), 3-Aminopropyl(isopropoxydimethylsilan), 3-Aminopropyl(dibutoxymethylsilan), 3-Aminopropyl(butoxydimethylsilan), 3-Aminopropyl(disiobutoxymethylsilan), 3-Aminopropyl(isobutoxydimethylsilan), 3-Aminopropyl(didodecanoxymethylsilan), 3-Aminopropyl(dodecanoxydimethylsilan), 3-Aminopropyl(ditetradecanoxymethylsilan), 3-Aminopropyl(tetradecanoxy-dimethylsilan), 2-Aminoethyl(trimethoxysilan), 2-Aminoethyl(triethoxysilan), 2-Aminoethyl(diethoxymethoxysilan), 2-Aminoethyl(tripropoxysilan), 2-Aminoethyl(dipropoxymethoxysilan), 2-Aminoethyl(tridodecanoxysilan), 2-Aminoethyl(tritetradecanoxysilan), 2-Aminoethyl(trihexadecanoxysilan), 2-Aminoethyl(trioctadecanoxysilan), 2-Aminoethyl(didodecanoxy)tetradecanoxysilan, 2-Aminoethyl(dodecanoxy)tetradecanoxy(hexadecanoxy)silan, 2-Aminoethyl(dimethoxymethylsilan), 2-Aminoethyl(methoxydimethylsilan), 2-Aminoethyl(diethoxymethylsilan), 2-Aminoethyl(ethoxydimethylsilan), 1-Aminomethyl(trimethoxysilan), 1-Aminomethyl(triethoxysilan), 1-Aminomethyl(diethoxymethoxysilan), 1-Aminomethyl(dipropoxymethoxysilan), 1-Aminomethyl(tripropoxysilan), 1-Aminomethyl(trimethoxysilan), 1-Aminomethyl(dimethoxymethylsilan), 1-Aminomethyl(methoxydimethylsilan), 1-Aminomethyl(diethoxymethylsilan), 1-Aminomethyl(ethoxydimethylsilan), 3-Aminobutyl(trimethoxysilan), 3-Aminobutyl(triethoxysilan), 3-Aminobutyl(diethoxymethoxysilan), 3-Aminobutyl(tripropoxysilan), 3-Aminobutyl(dipropoxymethoxysilan), 3-Aminobutyl(dimethoxymethylsilan), 3-Aminobutyl(diethoxymethylsilan), 3-Aminobutyl(dimethylmethoxysilan), 3-Aminobutyl(dimethylethoxysilan), 3-Aminobutyl(tridodecanoxysilan), 3-Aminobutyl(tritetradecanoxysilan), 3-Aminobutyl(trihexadecanoxysilan), 3-Aminobutyl(didodecanoxy)tetradecanoxysilan, 3-Aminobutyl(dodecanoxy)tetra-decanoxy(hexadecanoxy)silan, 3-Amino-2-methylpropyl(trimethoxysilan), 3-Amino-2-methyl-propyl(triethoxysilan), 3-Amino-2-methylpropyl(diethoxymethoxysilan), 3-Amino-2-methyl-propyl(tripropoxysilan), 3-Amino-2-methylpropyl(dipropoxymethoxysilan), 3-Amino-2-methyl-propyl(tridodecanoxysilan), 3-Amino-2-methylpropyl(tritetradecanoxysilan), 3-Amino-2-methyl-propyl(trihexadecanoxysilan), 3-Amino-2-methylpropyl(trioctadecanoxysilan), 3-Amino-2-methyl-propyl(didodecanoxy)tetradecanoxysilan, 3-Amino-2-methyl-propyl(dodecanoxy)tetradecanoxy(hexadecanoxy)silan, 3-Amino-2-methylpropyl(dimethoxymethylsilan), 3-Amino-2-methyl-propyl(methoxydimethylsilan), 3-Mercapto-2-methyl-propyl(diethoxymethylsilan), 3-Mercapto-2-methyl-propyl(ethoxydimethylsilan), 3-Mercapto-2-methyl-propyl(dipropoxymethylsilan), 3-Amino-2-methyl-propyl(propoxydimethylsilan), 3-Amino-2-methyl-propyl(diisopropoxymethylsilan), 3-Amino-2-methyl-propyl(isopropoxydimethylsilan), 3-Amino-2-methyl-propyl(dibutoxymethylsilan), 3-Amino-2-methyl-propyl(butoxydimethylsilan), 3-Amino-2-methyl-propyl(disiobutoxymethylsilan), 3-Amino-2-methylpropyl(isobutoxydimethylsilan), 3-Amino-2-methyl-propyl(didodecanoxymethylsilan), 3-Amino-2-methyl-propyl(dodecanoxy-dimethylsilan), 3-Amino-2-methyl-propyl(ditetradecanoxymethylsilan) oder 3-Amino-2-methyl-propyl (tetradecanoxydimethyl-silan), triaminofunktionelles Propyltrimethoxysilan, Bis(3-trimethoxysilylpropyl)-amin, Bis(3-triethoxysilylpropyl)-amin, N-Benzyl-N-(2-aminoethyl)-3-aminopropyltrimethoxysilan-Hydrochlorid, N-Benzyl-N-(2-aminoethyl)-3-aminopropyltrimethoxysilan-Hydroacetat, N-(n-Butyl)-3-aminopropyltrimethoxysilan, 3-Aminopropylmethyldiethoxysilan, N-Vinylbenzyl-N-(2-aminoethyl)-3-aminopropylpolysiloxan und N-(2-Aminoethyl)-3-aminopropylmethyldimethoxysilan.

Bevorzugte Aminosilane, Aminoalkylsilane oder alkoxysilylalkyl-substituierten Amine sind substituierte oder unsubstituierte Aminosilan-Verbindungen, insbesondere 3-Aminopropyltrimethoxysilan, 3-Aminopropyltriethoxysilan, 3-Aminopropylmethyldiethoxysilan, N-(2-Aminoethyl)-3-aminopropyltrimethoxysilan, 2-Aminopropyl-3-aminopropyltrimethoxysilan, 2-Aminopropyl-3-aminopropyltriethoxysilan, 2-Aminoethyl-2-aminoethyl-3-aminopropyltrimethoxysilan, 2-Aminoethyl-2-aminoethyl-3-aminopropyltriethoxysilan und N-(n-Butyl)-3-aminopropyltrimethoxysilan. Besonders bevorzugt werden 3-Aminopropyltrimethoxysilan (DYNASYLAN® AMMO), 3-Aminopropyltriethoxysilan (DYNASYLAN® AMEO), 3-Aminopropylmethyldiethoxysilan (DYNASYLAN® 1505), N-(n-Butyl)-3-aminopropyltrimethoxysilan (DYNASYLAN® 1189) und N-(2-Aminoethyl)-3-aminopropyltrimethoxysilan (DYNASYLAN® DAMO), (H₃CO)₃Si(CH₂)₃NH(CH₂)₃Si(OCH₃)₃(Bis-AMMO), (H₅C₂O)₃Si(CH₂)₃NH(CH₂)₃Si(OC₂H₅)₃ (Bis-AMEO), (H₃CO)₃Si(CH₂)₃NH(CH₂)₂NH(CH₂)₂NH(CH₂)₃Si(OCH₃)₃ (Bis-DAMO), jeweils der Fa. Evonik Industries AG, als Aminosilane der Formel (6) eingesetzt.

Die vorliegende Erfindung richtet sich auch auf ein Verfahren zur Herstellung der erfindungsgemäßen Verbindung (1), welches folgende Schritte umfasst:
a) Bereitstellen mindestens einer Isocyanat-Gruppe enthaltenden Verbindung der Formel R-N=C=O (4), wobei R ausgewählt ist aus der Gruppe umfassend substituierter oder unsubstituierter aliphatischer, aromatischer, cycloaliphatischer, heterocyclischer Rest und Alkoxysilylalkylrest, vorzugsweise Alkoxysilylalkylrest,
b) Bereitstellen mindestens einer Verbindung ausgewählt aus der Gruppe pharmakologisch aktiver Verbindungen, die mindestens eine Amin-Gruppe enthält;
c) Umsetzung der unter den Schritten a) und b) genannten Verbindungen in Gegenwart eines Katalysators.

Vorzugsweise weist die in Schritt a) bereitgestellte, mindestens eine Isocyanat-Gruppe enthaltende Verbindung eine Struktur der nachfolgenden Formel (5) auf: 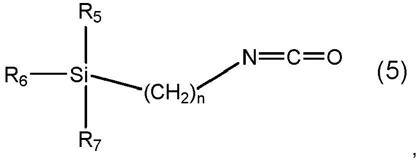 wobei n = 1 - 8 und R₅, R₆, R₇ unabhängig voneinander ausgewählt ist aus der Gruppe C1 - C3-Alkoxyrest.

Geeignete Verbindungen der Formel (5) sind beispielsweise Isocyanatoalkylalkoxysilane, die insbesondere ausgewählt sind aus der Gruppe umfassend 3-Isocyanatopropyltrimethoxysilan, 3-Isocyanatopropyltriethoxysilan, 3-Isocyanatopropyltriisopropoxysilan, 2-Isocyanatoethyltrimethoxysilan, 2-Isocyanatoethyltriethoxysilan, 2-Isocyanatoethyltriisopropoxysilan, 4-Isocyanatobutyltrimethoxysilan, 4-Isocyanatobutyltriethoxysilan, 4-Isocyanatobutyltriisopropoxysilane, Isocyanatomethyltrimethoxysilan, Isocyanatomethyltriethoxysilan und/oder Isocyanatomethytriisopropoxysilan.

Besonders bevorzugt werden 3-Isocyanatopropyltrialkoxysilane, insbesondere 3-Isocyanatopropyltrimethoxysilan und/oder 3-Isocyanatopropyltriethoxysilan als Verbindung der Formel (5) eingesetzt.

Im Sinne der vorliegenden Erfindung gehören zu den pharmakologisch aktiven Verbindungen beispielsweise Biozid-Produkte für die menschliche Hygiene, Desinfektionsmittel für den Privatbereich und den Bereich des öffentlichen Gesundheitswesens sowie andere Biozid-Produkte, Biozid-Produkte für die Hygiene im Veterinärbereich, Desinfektionsmittel für den Lebens- und Futtermittelbereich, Trinkwasserdesinfektionsmittel, Topf-Konservierungsmittel, Beschichtungsschutzmittel, Holzschutzmittel, Schutzmittel für Fasern, Leder, Gummi und polymerisierte Materialien, Schutzmittel für Mauerwerk, Schutzmittel für Flüssigkeiten in Kühl- und Verfahrenssystemen, Schleimbekämpfungsmittel, Schutzmittel für Metallbearbeitungsflüssigkeiten, Rodentizide, Avizide, Molluskizide, Fischbekämpfungsmittel, Insektizide, Akarizide und Produkte gegen andere Arthropoden, Repellentien und Lockmittel, Schutzmittel für Lebens- und Futtermittel, Antifouling-Produkte, Flüssigkeiten für Einbalsamierung und Taxidermie, Produkte gegen sonstige Wirbeltiere.

Bevorzugt weisen die in Schritt b) bereitgestellten, pharmakologisch aktiven Verbindungen, die mindestens eine Amin-Gruppe enthalten, eine heterocyclische Struktur, insbesondere eine heteroaromatische Struktur auf.

Bevorzugte, in dem hierin beschriebenen Verfahren in Schritt b) bereitgestellte, pharmakologisch aktive Verbindungen, die mindestens eine Amin-Gruppe enthalten, weisen eine Imidazol -Struktur, insbesondere eine mit einem Aralkyl-Rest substituierte Imidazol-Struktur auf.

Besonders bevorzugt sind in Schritt b) bereitgestellte pharmakologisch aktive Verbindungen ausgewählt aus Verbindungen mit den CAS-Registriernummern 86347-14-0, 86347-15-1, 113775-47-6 und/oder 106807-72-1.

Vorzugsweise wird in dem erfindungsgemäßen Verfahren in Schritt c) die Umsetzung unter Katalyse durchgeführt. Geeignet für die Katalyse des hierin beschriebenen Verfahrens sind z. B. Zinn-haltige Verbindungen, bevorzugt sind beispielsweise Dialkyl-Zinncarboxylate. Besonders bevorzugt sind z. B. Di-n-butylzinndiacetat, Di-n-butylzinndilaurat, Di-n-butylzinnmaleat, Di-n-butylzinn-bis-2-ethylhexanoat sowie Di-n-butylzinndineodecanoat, Dioctylzinncarboxylate, wie Di-n-octylzinndiacetat, Di-n-octylzinndilaurat, Di-n-octylzinnmaleat, Di-n-octylzinn-bis-2-ethylhexanoat oder Di-n-octylzinndineodecanoat. Die Menge an verwendeter Zinn-haltiger Verbindung zur Katalyse beträgt 0,001 bis 0,1 Gew.-%, bevorzugt 0,001 bis 0,01 Gew.-% bezogen auf die in Schritt a) und Schritt b) eingesetzten Edukte.

Bevorzugt werden in Schritt c) die mindestens eine Isocyanat-Gruppe enthaltende Verbindung (4) und die pharmakologisch aktive Verbindung äquimolar umgesetzt. Vorteilhafterweise wird die Umsetzung bis zu einem Restgehalt an Isocyanat von weniger als 0,1 Gew.-% bezogen auf die in Schritt a) und Schritt b) eingesetzten Edukte durchgeführt. Die Bestimmung des Isocyanat-Gehalts erfolgt nach DIN EN/ISO 11909.

Die Umsetzung kann lösemittelfrei oder unter Verwendung von nicht-protischen Lösemitteln erfolgen, wobei die Umsetzung diskontinuierlich oder kontinuierlich erfolgen kann. Die Reaktion kann bei Raumtemperatur, das heißt bei Temperaturen im Bereich von 20 - 25 °C, durchgeführt werden, bevorzugt werden jedoch höhere Temperaturen im Bereich von 30 - 150 °C, insbesondere im Bereich von 50 - 150 °C verwendet. Unter nicht-protischen Lösungsmitteln werden solche verstanden, deren Moleküle eine niedrige Polarität aufweisen, beispielsweise durch Abwesenheit von Hydroxylgruppen. Geeignete nicht-protische Lösungsmittel gehören zur Gruppe der Alkylenglykol-alkylethercarboxylate, wie z.B. Methoxypropylacetate. Es ist vorteilhaft die Umsetzung unter Rühren durchzuführen.

In einer bevorzugten Ausführungsform des erfindungsgemäßen Verfahrens wird die erfindungsgemäße Verbindung (1) oder eine ihrer Ausführungsformen oder das Umsetzungsprodukt aus dem hierin zuvor beschriebenen Verfahren zu deren Herstellung in einer Zusammensetzung erhalten. Hierzu wird die erfindungsgemäße Verbindung (1) oder eine ihrer Ausführungsformen oder das Umsetzungsprodukt aus dem hierin zuvor beschriebenen Verfahren zu deren Herstellung weiter mit einem Haftvermittler der Formel (6), wie zuvor beschrieben, vermischt.

Vorzugsweise werden in dem Verfahren zur Herstellung einer Zusammensetzung die erfindungsgemäße Verbindung (1) oder eine ihrer Ausführungsformen oder das Umsetzungsprodukt aus dem hierin zuvor beschriebenen Verfahren zu deren Herstellung neben dem zuvor beschriebenen Haftvermittler der Formel (6) unter Katalyse vermischt.

Bevorzugte Haftvermittler sind ausgewählt unter 3-Aminopropyltrimethoxysilan, 3-Aminopropyltriethoxysilan, 3-Aminopropylmethyldiethoxysilan, N-(2-Aminoethyl)-3-aminopropyltrimethoxysilan, 2-Aminopropyl-3-aminopropyltrimethoxysilan, 2-Aminopropyl-3-aminopropyltriethoxysilan, 2-Aminoethyl-2-aminoethyl-3-aminopropyltrimethoxysilan, 2-Aminoethyl-2-aminoethyl-3-aminopropyltriethoxysilan und N-(n-Butyl)-3-aminopropyltrimethoxysilan. Besonders bevorzugt werden 3-Aminopropyltrimethoxysilan (DYNASYLAN® AMMO), 3-Aminopropyltriethoxysilan (DYNASYLAN® AMEO), 3-Aminopropylmethyldiethoxysilan (DYNASYLAN® 1505), N-(n-Butyl)-3-aminopropyltrimethoxysilan (DYNASYLAN® 1189) und N-(2-Aminoethyl)-3-aminopropyltrimethoxysilan (DYNASYLAN® DAMO), (H₃CO)₃Si(CH₂)₃NH(CH₂)₃Si(OCH₃)₃ (Bis-AMMO), (H₅C₂O)₃Si(CH₂)₃NH(CH₂)₃Si(OC₂H₅)₃ (Bis-AMEO), (H₃CO)₃Si(CH₂)₃NH(CH₂)₂NH(CH₂)₂NH(CH₂)₃Si(OCH₃)₃ (Bis-DAMO), jeweils der Fa. Evonik Industries AG, als Aminosilane der Formel (6) eingesetzt.

Geeignet für die Katalyse dieser Ausführungsform des erfindungsgemäßen Verfahrens sind z. B. Zinn-haltige Verbindungen, bevorzugt sind beispielsweise Dialkyl-Zinncarboxylate. Besonders bevorzugt sind z. B. beispielsweise Di-n-butylzinndiacetat, Di-n-butylzinndilaurat, Di-n-butylzinnmaleat, Di-n-butylzinn-bis-2-ethylhexanoat sowie Di-n-butylzinndineodecanoat, Dioctylzinncarboxylate, wie Di-n-octylzinndiacetat, Di-n-octylzinndilaurat, Di-n-octylzinnmaleat, Di-n-octylzinn-bis-2-ethylhexanoat oder Di-n-octylzinndineodecanoat.

Die Menge an verwendeter Zinn-haltiger Verbindung zur Katalyse beträgt 0,001 bis 0,5 Gew.-%, bevorzugt 0,01 bis 0, 1 Gew.-%, bezogen auf die Menge an erfindungsgemäßer Verbindung (1) oder eine ihrer Ausführungsformen oder das Umsetzungsprodukt aus dem hierin zuvor beschriebenen Verfahren zu deren Herstellung und dem verwendeten Haftvermittler der Formel (6), wie zuvor beschrieben.

Ein weiterer Gegenstand der vorliegenden Erfindung ist ein Verfahren zum Auftragen der erfindungsgemäßen Zusammensetzung, in welchem die Umsetzung zu einer erfindungsgemäßen Verbindung (1) derart erfolgt, dass mindestens eine Isocyanat-Gruppe enthaltende Verbindung der Formel R-N=C=O (4), und mindestens eine pharmakologisch aktiven Verbindung, die mindestens eine Amin-Gruppe enthält, wie zuvor definiert, durch das Auftragen auf das zu beschichtende Substrat in Kontakt gebracht werden.

Ein weiterer Gegenstand der Erfindung ist die Verwendung der erfindungsgemäßen Verbindung (1) oder eine ihrer Ausführungsformen oder das Umsetzungsprodukt aus dem hierin zuvor beschriebenen Verfahren zu deren Herstellung als oder zur Herstellung von Beschichtungen, insbesondere Beschichtungen von Unterwasserstrukturen, vorzugsweise zum Schutze vor Ansiedelung und/oder Wachstum von marinen Organismen.

In einer Ausführungsform dieser Verwendung wird die erfindungsgemäße Zusammensetzung auf die Unterwasserstrukturen aufgetragen, wobei die Aushärtung und Ausbildung einer Beschichtung vorzugsweise bei Raumtemperatur, d. h. bei Temperaturen im Bereich von 20 - 25 °C, erfolgt.

Die unter den o. a. CAS- Registriernummern 86347-14-0, 86347-15-1, 113775-47-6 und/oder 106807-72-1 erfassten pharmakologisch aktiven Verbindungen sind neben dem systematischen Namen (*RS*)-4-[1-(2,3-Dimethylphenyl)ethyl]-1*H*-imidazol für das Racemat unter dem allgemeinen Namen Medetomidin offenbart. Medetomidin ist bekannt für seine Verwendung in der Veterinär- und Humanmedizin als Sedativum und Analgetikum.

US 2007/0028825 A1 und WO 2015011177 A1 offenbaren die Verwendung von Medetomidin, wie zuvor beschrieben, physikalisch gelöst oder in suspendierter Form in einer Beschichtungszusammensetzung, beispielsweise in einem Lack, und z. T. auch in Mischungen mit weiteren, gegen marine Organismen wirksamen Stoffen, um einem Bewuchs bzw. Biofouling entgegenzuwirken.

Die Erfinder haben nunmehr überraschenderweise festgestellt, dass die Aktivität von Medetomidin gegen einen Bewuchs bzw. Biofouling an Unterwasserstrukturen erhalten bleibt, auch wenn Medetomidin, wie zuvor beschrieben, in einer chemischen Reaktion unter Ausbildung einer kovalenten Bindung mit mindestens einer Isocyanat-Gruppe enthaltenden Verbindung der Formel R-N=C=O (4) zu mindestens einer Addukt-Verbindung der Formel (1) umgesetzt wird.

Die Reaktivität der Umsetzung zwischen Medetomidin, wie zuvor beschrieben, und der mindestens eine Isocyanat-Gruppe enthaltenden Verbindung der Formel R-N=C=O (4) zu einer entsprechenden Adduktverbindung der Formel (1) ist hinreichend groß, so dass auch 2-Komponenten-Systeme zur Beschichtung von Unterwasserstrukturen realisiert werden können, wie es in einigen Ausführungsformen der vorliegenden Erfindung bereits offenbart ist.

Der offensichtliche Vorteil gegenüber dem Stand der Technik, wie er z. B. in US 2007/0028825 A1 oder WO 2015011177 A1 offenbart ist, liegt in der chemischen Bindung der pharmakologisch aktiven Verbindung, die mindestens eine Amin-Gruppe aufweist, insbesondere von Medetomidin, wie hier offenbart, an mindestens eine Isocyanat-Gruppe enthaltende Verbindung. Ferner überrascht auch die Tatsache, dass die Aktivität gegen einen Bewuchs bzw. Biofouling an Unterwasserstrukturen der erfindungsgemäßen Verbindungen auch in einer Zusammensetzung, beispielsweise zur Beschichtung, erhalten bleibt.

Ein Auslaugen oder eine signifikante Verarmung der Konzentration an Medetomidin, so es nicht kovalent gebunden ist, wie beispielsweise in einer Addukt-Verbindung mit einer Isocyanat-Gruppe enthaltenden Verbindung, in einer Zusammensetzung nach dem Stand der Technik wird durch die erfindungsgemäße Lehre vermieden. Dadurch wird der Schutz von Unterwasserstrukturen vor einem Bewuchs von marinen Organismen bzw. Biofouling zeitlich verlängert.

Es ist selbstverständlich und beabsichtigt, dass alle Ausführungsformen, die hierin im Zusammenhang mit den beschriebenen Verbindungen und Zusammensetzungen offenbart sind, in gleichem Maße auf die beschriebenen Verwendungen und Verfahren anwendbar sind und umgekehrt. Derartige Ausführungsformen fallen daher ebenfalls in den Umfang der vorliegenden Erfindung.

Die nachfolgenden Beispiele sollen den Gegenstand der vorliegenden Erfindung näher erläutern, ohne dabei einschränkend zu wirken.

### Erfindungsgemäßes Beispiel 1: Herstellung der Verbindung 2

Es werden 101,60g 3-Isocyanatopropyltrimethoxysilan, kommerziell erhältlich als Vestanat® EP-IPMS, mit 98,38 g Medetomidin, kommerziell erhältlich als Selektope®, in äquimolarer Menge umgesetzt. Zur Katalyse wird 0,01 Gew.-% Dibutyl-dilauryl Stannat hinzugegeben. Diese Mischung wird über einen Zeitraum von 3 Stunden unter Rühren auf 60°C erwärmt und nach weiteren 30 Minuten wird 20 Gew.-% Propylenglykol-monomethyletheracetat, kommerziell erhältlich als Dowanol™ PMA, als Lösemittel hinzugegeben. Die Lösung wird weiter gerührt bis ein Isocyanat-Restgehalt von < 0,1 Gew-% - bestimmt nach DIN EN ISO 11909 - erreicht ist; Dauer ca. 5h. Alle prozentualen Angaben beziehen sich auf die Einwaagen an den Edukten 3-Isocyanatopropyltrimethoxysilan und Medetomidin. Anschließend wird diese Lösung unter Rühren auf Raumtemperatur abgekühlt und das Lösemittel entfernt.

Die ¹³C-NMR-analytische Untersuchung bestätigt die zuvor offenbarte Struktur der erfindungsgemäßen Verbindung 2.

3-Isocyanatopropyltrimethoxysilan wurde vollständig zum Addukt, der erfindungsgemäßen Verbindung der Formel (2), umgesetzt, entsprechend ist das Signal der freien NCO-Gruppe bei ca. 122 ppm verschwunden und ein neues Carbonylsignal bei 149 ppm entstanden.

Die Probe enthält zusätzlich Reste an dem Lösemittel Methoxypropylenglykolacetat.

Alle Signale sind in der nachfolgenden Tabelle 1 zugeordnet.

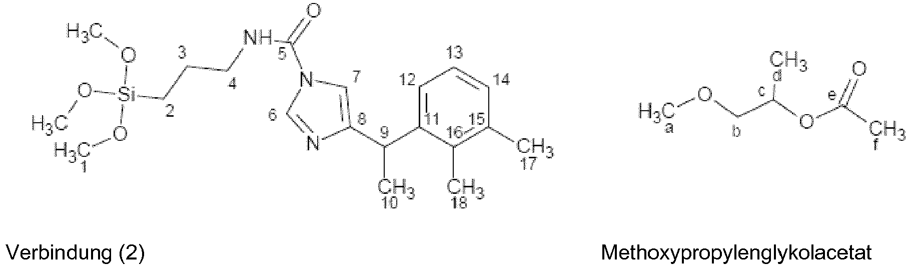

**Tabelle 1, Signalzuordnung ¹³C-NMR:**

| **Signallage [ppm]** | **Intensität** | **Multiplizität** | **Zuordnung** |
|---|---|---|---|
| **170,6** | 0,7 | Cq | e |
| **149,4** | 1 | Cq | 5 |
| **148,4** | 1 | Cq | 8 |
| **142,7** | 1 | Cq | 11 |
| **136,7** | 1 | Cq | 16 |
| **136,0** | 1 | CH* | 6 |
| **134,0** | 1 | Cq | 15 |
| **128,0** | 1 | CH | 10 |
| **125,5** | 1 | CH | 13 |
| **124,5** | 1 | CH | 12 |
| **112,4** | 1 | CH* | 7 |
| **77,8** | - | Cq | CDCl₃ |
| **75,1** | 0,7 | CH₂ | b |
| **69,4** | 0,7 | CH | C |
| **59,0** | 0,7 | CH₃ | a |
| **50,5** | 3 | CH₃ | 1 |
| **43,2** | 1 | CH₂ | 4 |
| **35,3** | 1 | CH | 9 |
| **22,7** | 1 | CH₂ | 3 |
| **21,2** | 0,7 | CH₃ | f |
| **20,9** | 1 | CH₃ | 17 |
| **20,6** | 1 | CH₃ | 10 |
| **16,6** | 0,7 | CH₃ | d |
| **14,7** | 1 | CH₃ | 18 |
| **6,7** | 1 | CH₂ | 2 |

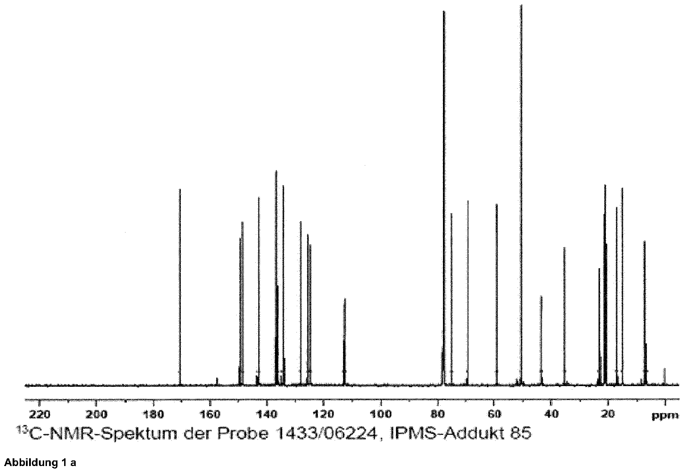

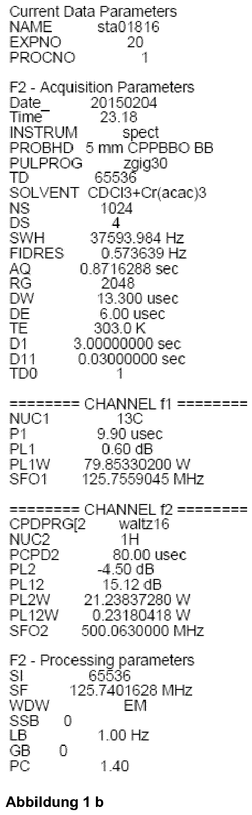

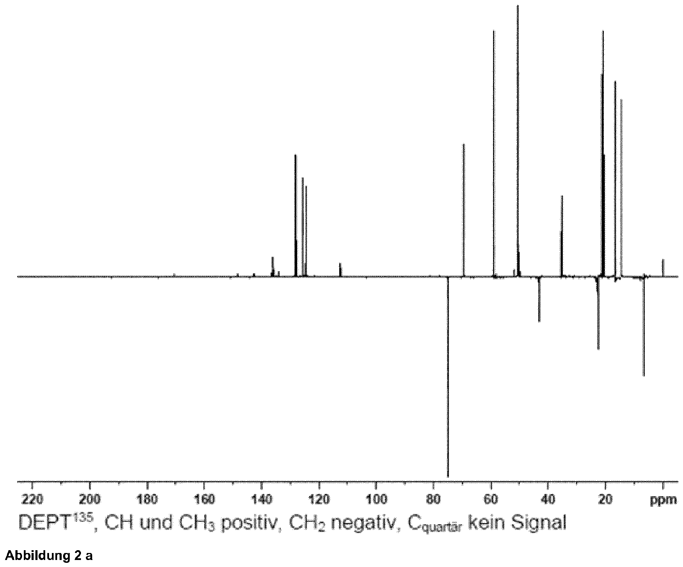

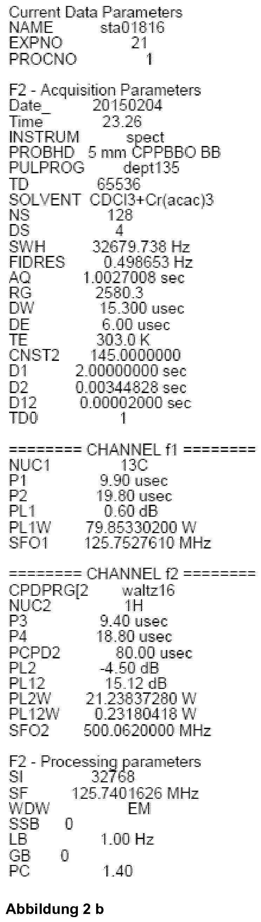

Die Zuordnung der Signale der jeweiligen Kohlenstoffatme in der erfindungsgemäßen Verbindung der Formel (2) ist in der Tabelle 1 durch Ziffern 1 - 18 gekennzeichnet, die entsprechende Zuordnung der Signale der Reste an Lösemittel durch Buchstaben a - f. Die Signale mit den Zuordnungen 6 und 7 in einem DEPT-Experiment der ¹³C-NMR-Messung bestätigen die Positionen im heteroaromatischen Cyclus als tertiäre Kohlenstoffe CH in der erfindungsgemäßen Verbindung der Formel (2). Die nachfolgenden Abbildungen 1 a und 2 a geben die Resultate der ¹³C-NMR-Messungen wieder. In den Abbildungen 1 b und 2 b sind die jeweiligen Messbedingungen offenbart.

### Erfindungsgemäßes Beispiel 2: Herstellung der Zusammensetzung

Das hergestellte Addukt aus 3-Isocyanatopropyltrimethoxysilan und Medetomidin aus dem erfindungsgemäßen Beispiel 1, die erfindungsgemäße Verbindung der Formel (2), wird mit 3-Aminopropyltrimethoxysilan und Dibutyl-dilauryl Stannat in einem Gewichtsverhältnis von 1 : 0,1 : 0,001 bezogen auf die eingesetzte Menge an dem Addukt der Formel (2) bei Raumtemperatur vermischt.

**Erfindungsgemäßes Beispiel 3:** Verwendung der Zusammensetzung zur Beschichtung von Unterwasserstrukturen zum Schutze vor Ansiedelung und/oder Wachstum von marinen Organismen auf Unterwasserstrukturen.

Die in dem erfindungsgemäßen Beispiel 2 erhaltene Zusammensetzung wird auf Versuchsplatten als Substrat aufgetragen. Die Aushärtung erfolgt bei Raumtemperatur.

Die Versuchsplatten werden auf Rahmen montiert und im Hooksmeer/Nordsee in einem Zeitraum von Mai bis Oktober ausgelagert. Die Konstruktion ist an Bojen befestigt und konstant von Seewasser bedeckt. Die Untersuchung der jeweiligen Platten erfolgte in regelmäßigen zeitlichen Abständen. Ab Mai 2014 wurde ein Abwischtest durchgeführt, indem mit einem Handbesen jeweils fünfmal von links nach rechts unter leichtem Druck gebürstet wurde. Die abschließende Reinigung mit dem Hochdruckreinigungsgerät erfolgte nach dem Auslagerungszeitraum Ende Oktober 2014.

### Auswertung

Die Reaktion von 41 Gew-% Medetomidin, 42% 3-Isocyanatopropyltrimethoxysilan in 17% Propylenglykol-monomethyletheracetat und die daraus hergestellte Lackformulierung auf Basis des kommerziell erhältlichen Produkts VESTANAT® EP-MF 201 enthielt 12,5 Gew.-% Addukt der erfindungsgemäßen Verbindung der Formel (2). Die beschichteten Platten zeigten nach der Bewuchsphase einen einfach zu entfernenden Bewuchs oder Biofouling.

**Tabelle 2**

| **Datum** | **Kieselalgen** | **Bewuchs** |
|---|---|---|
| 27.5.2014 | Dichte Besiedlung | dichter Bewuchs an Zypressenmoos |
| 18.6.2014 | Dichte Besiedlung | dichter Bewuchs an Zypressenmoos |
| 11.7.2014 | Dichte Besiedlung | dichter Bewuchs an Zypressenmoos |
| 25.7.2014 | Weniger Besiedlung | Weniger Bewuchs |
| 7.8.2014 | Keine Besiedelung | Rotalgen, Zypressenmoos |
| 22.8.2014 | Wenige Algen | Rotalgen, Zypressenmoos |
| 17.9.2014 | Wenige Algen | vollflächig Rotalgen und Zypressenmoos |
| 4.10.2014 | Wenige Algen | vollflächig und Zypressenmoos |
| 20.10.2014 | Wenige Algen | vollflächig und Zypressenmoos |

Die Auswertung der Platten zeigt, dass zunächst ein Wachstum von Kieselalgen und Zypressenmoos stattfindet, dieser jedoch nach einigen Wochen wieder abnimmt bzw. sich von der Platte entfernt. Nach einigen Wochen ist der Bewuchs von Rotalgen zu sehen, jedoch wurde über den gesamten Zeitraum kein Bewuchs von Seepocken beobachtet. Die Ergebnisse sind in Tabelle 2 zusammengefasst.

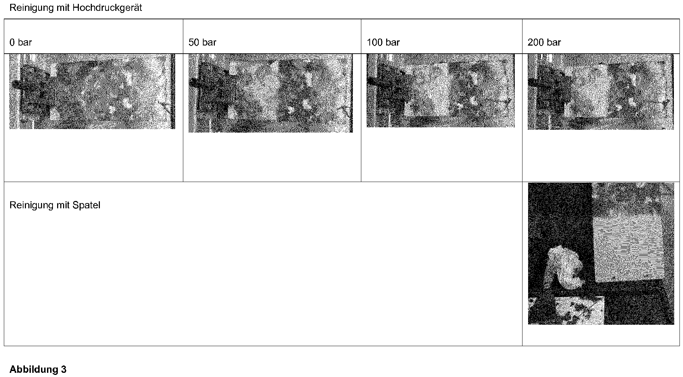

Der Bewuchs zeigt nur ein geringes Anhaftungsprofil, da dieser mittels Abwischtest entfernt werden kann. Eine Reinigung mit dem Hochdruckreinigungsgerät zeigt eine fast vollständige Reinigung der Platten und dies schon bei geringer Druckanwendung. Eine vollständige Reinigung unter leichter Behandlung mit einem Spatel konnte abschließend gezeigt werden. Die nachfolgende Abbildung 3 zeigt jeweils Aufnahmen der Resultate dieser Reinigungsversuche mit Angabe der Reinigungsart - manuell mit Spatel oder Hochdruckreinigungsgerät - und des verwendeten Drucks.

### Vergleichsbeispiel: Verwendung der Zusammensetzung zur Beschichtung von Unterwasserstrukturen in Abwesenheit eines Addukts der erfindungsgemäßen Verbindung der Formel (2)

Es wird eine Zusammensetzung in Abwesenheit von Medetomidin hergestellt und auf Versuchsplatten als Substrat aufgetragen. Die Aushärtung erfolgt bei Raumtemperatur.

Die Versuchsplatten werden auf Rahmen montiert und im Hooksmeer/Nordsee in einem Zeitraum von Mai bis Oktober ausgelagert. Die Konstruktion ist an Bojen befestigt und konstant von Seewasser bedeckt. Die Untersuchung der jeweiligen Platten erfolgte in regelmäßigen zeitlichen Abständen. Ab Mai 2014 wurde ein Abwischtest durchgeführt, indem mit einem Handbesen jeweils fünfmal von links nach rechts unter leichtem Druck gebürstet wurde. Die abschließende Reinigung mit dem Hochdruckreinigungsgerät erfolgte nach dem Auslagerungszeitraum Ende Oktober 2014.

### Auswertung

Die beschichteten Platten in Abwesenheit eines Addukts der erfindungsgemäßen Verbindung der Formel (2) zeigen nach der Bewuchsphase einen nicht zu entfernenden Bewuchs.

**Tabelle 3**

| **Datum** | **Kieselalgen** | **Bewuchs** |
|---|---|---|
| 27.5.2014 | Dichte Besiedlung | Wenig Bewuchs |
| 18.6.2014 | Dichte Besiedlung | Wenig Bewuchs |
| 11.7.2014 | Dichte Besiedlung | Wenig Bewuchs |
| 25.7.2014 | Starke Besiedlung | Wenig Besuchs vereinzelt Zypressenmoos |
| 7.8.2014 | Weniger Besiedlung | Kleine Seepocken |
| 22.8.2014 | Mäßige Besiedlung | Größere Organismen als 640 |
| 17.9.2014 | Mäßige Besiedlung | kleine Formen, Rotalgen |
| 4.10.2014 | Mäßige Besiedlung | Rotalgen, Seepocken |
| 20.10.2014 | Vollständige Besiedlung | Seepocken, übersiedelt mit Rotalgen |

Die Auswertung der Platten zeigt, dass zunächst ein Wachstum von Kieselalgen stattfindet, dieses zunächst zunimmt dann jedoch nach einigen Wochen wieder abnimmt bzw. sich von der Platte entfernt. Nach einigen Wochen wird der Bewuchs von Zypressenmoos und Seepocken beobachtet. Die Ergebnisse sind in Tabelle 3 zusammengefasst.

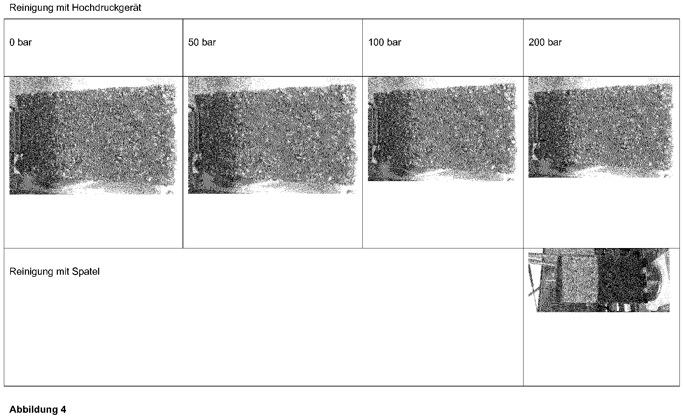

Der Bewuchs zeigt ein starkes Anhaftungsprofil, so dass die Behandlung mit dem Hochdruckreinigungsgerät keine Reinigung der Platten erzielt. Auch eine druckfeste Behandlung mit einem Spatel führt zu keiner vollständigen Reinigung. Dieser Sachverhalt wird durch die nachfolgende Abbildung 4 offenbart. Sie zeigt jeweils Aufnahmen der Resultate dieser Reinigungsversuche mit Angabe der Reinigungsart - manuell mit Spatel oder Hochdruckreinigungsgerät - und des verwendeten Drucks.

Die starke Anhaftung des Biofouling wird insbesondere dadurch deutlich, dass auch eine Hochdruckreinigung bis zu 200 bar zu keinem sichtbaren Reinigungserfolg führt.

## Patentansprüche

1. Verbindung der Formel: 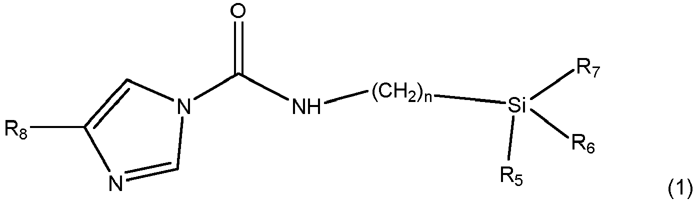 **dadurch gekennzeichnet, dass**
n = 1 - 8 ist,
R₅, R₆, R₇ unabhängig voneinander ausgewählt sind aus der Gruppe C1 - C3-Alkoxyrest,
Rs ausgewählt ist aus der Gruppe Alkyl-, Aralkyl-, Heteroaralkylrest.

2. Verbindung nach Anspruch 1, **dadurch gekennzeichnet, dass** sie die Formel: 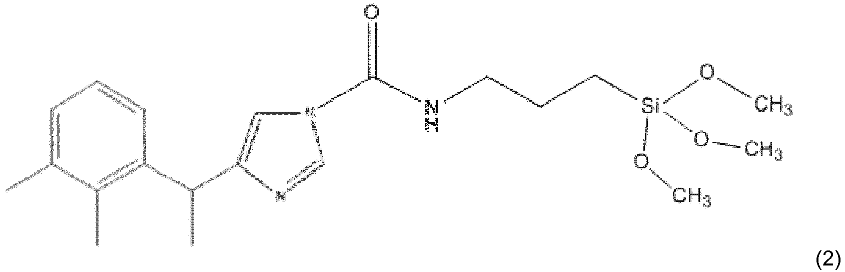 aufweist.

3. Zusammensetzung, **dadurch gekennzeichnet, dass** sie mindestens eine Verbindung nach einem der Ansprüche 1 - 2 aufweist.

4. Zusammensetzung nach Anspruch 3, **dadurch gekennzeichnet, dass** sie die Verbindung der Formel (2) aufweist.

5. Zusammensetzung nach Anspruch 3 oder 4, **dadurch gekennzeichnet, dass** sie einen Haftvermittler, vorzugsweise ausgewählt aus der Gruppe der alkoxysilylalkyl-substituierten Amine, aufweist.

6. Verfahren, **dadurch gekennzeichnet, dass** es folgende Schritte aufweist:
a) Bereitstellen mindestens einer Isocyanat-Gruppe enthaltenden Verbindung der Formel R-N=C=O (4), wobei R ausgewählt ist aus der Gruppe umfassend substituierter oder unsubstituierter aliphatischer, aromatischer, cycloaliphatischer, heterocyclischer Rest und Alkoxysilylalkylrest, vorzugsweise Alkoxysilylalkylrest,
b) Bereitstellen mindestens einer Verbindung ausgewählt aus der Gruppe pharmakologisch aktiver Verbindungen, die mindestens eine Amin-Gruppe enthält; wobei die pharmakologisch aktive Verbindung ausgewählt ist aus Verbindungen mit den CAS-Registriernummern 86347-14-0, 86347-15-1, 113775-47-6 und/oder 106807-72-1,
c) Umsetzung der unter den Schritten a) und b) genannten Verbindungen in Gegenwart eines Katalysators.

7. Verfahren nach Anspruch 6, **dadurch gekennzeichnet, dass** die in Schritt a) bereitgestellte, mindestens eine Isocyanat-Gruppe enthaltende Verbindung die Formel: 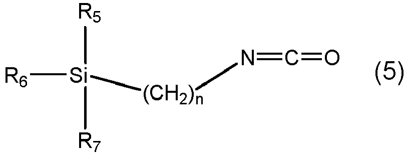 aufweist, wobei n = 1 - 8 und R5, R6, R7 unabhängig voneinander ausgewählt sind aus der Gruppe C1 - C3-Alkoxyrest.

8. Verfahren nach mindestens einem der Ansprüche 6 bis 7, **dadurch gekennzeichnet, dass** das Umsetzungsprodukt aus Schritt c) mit einem Haftvermittler, vorzugsweise ausgewählt aus der Gruppe der alkoxysilylalkyl-substituierten Amine, vermischt wird.

9. Verfahren nach mindestens einem der Ansprüche 6 bis 8, **dadurch gekennzeichnet, dass** in Schritt a) und/oder b) außerdem ein Haftvermittler, vorzugsweise ausgewählt aus der Gruppe der alkoxysilylalkyl-substituierten Amine, bereitgestellt wird.

10. Verwendung einer Verbindung nach mindestens einem der Ansprüche 1 bis 2, einer Zusammensetzung gemäß mindestens einem der Ansprüche 3 bis 5 oder eines Verfahrens gemäß mindestens einem der Ansprüche 6 bis 9 als oder zur Herstellung von Beschichtungen, insbesondere Beschichtungen von Unterwasserstrukturen.

## Claims

1. Compound of the formula: 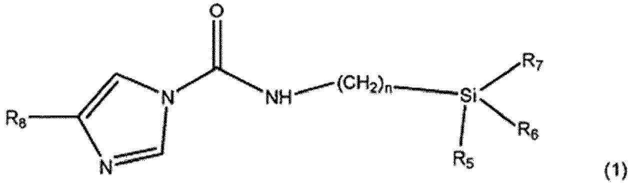 **characterized in that**
n = 1 - 8,
R₅, R₆, R₇ are each independently selected from the group of C1-C3-alkoxy radicals,
R₈ is selected from the group comprising alkyl, aralkyl and heteroaralkyl radicals.

2. Compound according to Claim 1, **characterized in that** said compound has the formula:

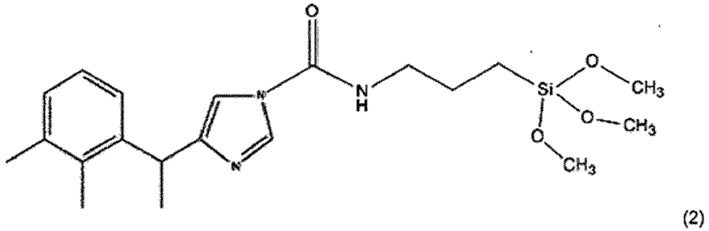

3. Composition, **characterized in that** said composition comprises at least one compound according to either of Claims 1 - 2.

4. Composition according to Claim 3, **characterized in that** said composition comprises the compound of the formula (2).

5. Composition according to Claim 3 or 4, **characterized in that** said composition comprises an adhesion promoter, preferably selected from the group of alkoxysilylalkyl-substituted amines.

6. Method, **characterized in that** said method comprises the following steps:
a) providing at least one isocyanate group-containing compound of the formula R-N=C=O (4), where R is selected from the group comprising substituted or unsubstituted aliphatic, aromatic, cycloaliphatic, heterocyclic radicals and alkoxysilylalkyl radicals, preferably alkoxysilylalkyl radicals,
b) providing at least one compound selected from the group of pharmacologically active compounds comprising at least one amine group; wherein the pharmacologically active compound is selected from compounds with CAS registry numbers 86347-14-0, 86347-15-1, 113775-47-6 and/or 106807-72-1,
c) reacting the compounds specified in steps a) and b) in the presence of a catalyst.

7. Method according to Claim 6, **characterized in that** the at least one isocyanate group-containing compound provided in step a) has the formula: 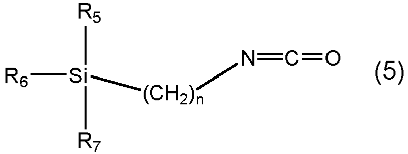 where n = 1 - 8 and R5, R6, R7 are each independently selected from the group of C1 - C3-alkoxy radicals.

8. Method according to at least one of Claims 6 to 7, **characterized in that** the reaction product of step c) is mixed with an adhesion promoter, preferably selected from the group of alkoxysilylalkyl-substituted amines.

9. Method according to at least one of Claims 6 to 8, **characterized in that** in step a) and/or b) an adhesion promoter is also provided, preferably selected from the group of alkoxysilylalkyl-substituted amines.

10. Use of a compound according to at least one of Claims 1 to 2, a composition according to at least one of Claims 3 to 5 or a method according to at least one of Claims 6 to 9 as or for the preparation of coatings, especially coatings of underwater structures.

## Revendications

1. Composé de formule : 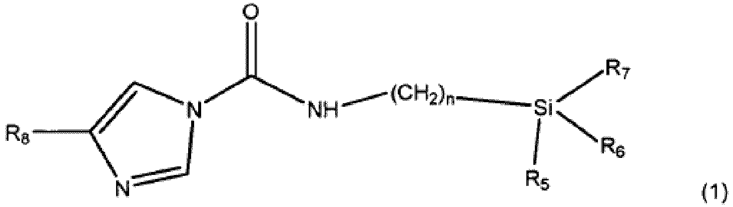 **caractérisé en ce que**
n = 1 à 8,
R₅, R₆, R₇, indépendamment les uns des autres, sont choisis dans le groupe de radical C₁₋₃-alcoxy,
R₈ est choisi dans le groupe de radical alkyle, radical aralkyle, radical hétéroaralkyle.

2. Composé selon la revendication 1, **caractérisé en ce qu'**il présente la formule :

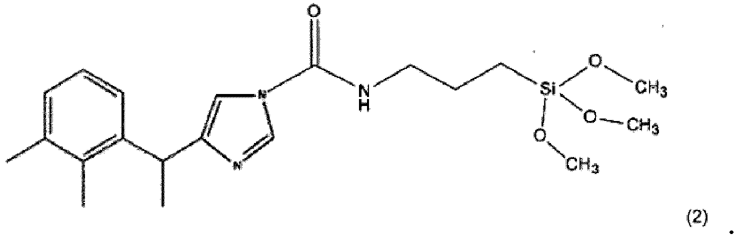

3. Composition, **caractérisée en ce qu'**elle présente au moins un composé selon l'une quelconque des revendications 1 et 2.

4. Composition selon la revendication 3, **caractérisée en ce que** le composé présente la formule (2).

5. Composition selon la revendication 3 ou 4, **caractérisée** qu'elle présente un promoteur d'adhérence, choisi de préférence dans le groupe des amines substituées par alcoxysilylalkyle.

6. Procédé, **caractérisé en ce qu'**il présente les étapes suivantes :
a) mise à disposition d'au moins un composé contenant un groupe isocyanate de formule R-N=C=O (4), R étant choisi dans le groupe comprenant un radical aliphatique, aromatique, cycloaliphatique, hétérocyclique substitué ou non substitué et un radical alcoxysilylalkyle, de préférence un radical alcoxysilylalkyle,
b) mise à disposition d'au moins un composé choisi dans le groupe de composés pharmacologiquement actifs qui contient au moins un groupe amine ; le composé pharmacologiquement actif étant choisi parmi des composés dotés des numéros d'enregistrement CAS 86347-14-0, 86347-15-1, 113775-47-6 et/ou 106807-72-1,
c) transformation des composés mentionnés dans les étapes a) et b) en présence d'un catalyseur.

7. Procédé selon la revendication 6, **caractérisé en ce que** l'au moins un composé contenant un groupe isocyanate mis à disposition dans l'étape a) présente la formule : 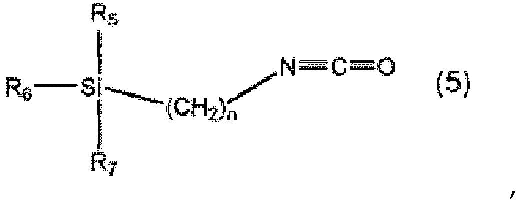 n = 1 à 8 et R₅, R₆, R₇, indépendamment les uns des autres, étant choisis dans le groupe de radical C₁₋₃-alcoxy.

8. Procédé selon au moins l'une des revendications 6 et 7, **caractérisé en ce que** le produit de transformation de l'étape c) est mélangé avec un promoteur d'adhérence, choisi de préférence dans le groupe des amines substituées par alcoxysilylalkyle.

9. Procédé selon au moins l'une des revendications 6 à 8, **caractérisé en ce que** dans l'étape a) et/ou b), un promoteur d'adhérence est en outre mis à disposition, choisi de préférence dans le groupe des amines substituées par alcoxysilylalkyle.

10. Utilisation d'un composé selon au moins l'une des revendications 1 et 2, d'une composition selon au moins l'une des revendications 3 à 5 ou d'un procédé selon au moins l'une des revendications 6 à 9 en tant que, ou pour la préparation de, revêtements, en particulier de revêtements pour des structures sous-marines.
